(19) Europäisches Patentamt

European Patent Office

Office européen des brevets

(11) **EP 1 452 262 A2**

(12) **DEMANDE DE BREVET EUROPEEN**

(43) Date de publication:
**01.09.2004 Bulletin 2004/36**

(51) Int Cl.⁷: **B23K 9/10**

(21) Numéro de dépôt: **03300221.3**

(22) Date de dépôt: **20.11.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **20.11.2002 FR 0214536**

(71) Demandeur: **LA SOUDURE AUTOGENE FRANCAISE**
**F-75321 Paris Cedex 07 (FR)**

(72) Inventeurs:
• **Reymond, Christian**
  **95160 Montmorency (FR)**
• **Gomes, Victor**
  **60500 Chantilly (FR)**

(74) Mandataire: **Pittis, Olivier**
  **L'Air Liquide, S.A.,**
  **Service Brevets & Marques,**
  **75, Quai d'Orsay**
  **75321 Paris Cedex 07 (FR)**

(54) **Module à haute fréquence pour circuit de commande de source de courant de soudage**

(57)     Module à haute-fréquence (MHF) pour source de courant de soudage ou de coupage comportant un circuit électrique comprenant une première branche de circuit, une deuxième branche de circuit et une troisième branche de circuit connectées en parallèles, et comprenant, en outre, plusieurs semi-conducteurs choisis parmi les transistors (T1, T2) et les diodes (D1, D2), au moins un bloc condensateur (BC) et des moyens de pilotage des semi-conducteurs, et dans lequel la première branche de circuit porte au moins un premier transistor (T1) commandé et la deuxième branche de circuit porte au moins un second transistor (T2) commandé. Source de courant de soudage ou coupage équipée d'un tel module à haute fréquence. Procédé de soudage ou coupage utilisant ladite source de courant.

FIGURE 2

## Description

La présente invention concerne un module à haute-fréquence pour source de courant de soudage ou de coupage à l'arc, encore appelé mode pulsé haute fréquence, et un générateur de courant équipé d'un tel module.

Dans le domaine du soudage à l'arc, la rigidité de l'arc électrique dépend de la forme du courant électrique générant l'arc.

Il a été montré que lorsqu'on confère au courant une forme rectangulaire à fréquence importante, typiquement à partir de 1 KHz, en le faisant évoluer entre une consigne basse (intensité basse) et une consigne haute (intensité haute), cela engendre un concentration de l'arc en une zone plus étroite, c'est-à-dire une constriction de l'arc, qui permet de pénétrer plus efficacement la ou les pièces à souder, de minimiser les déformations susceptibles de se produire et surtout d'augmenter la productivité.

Malheureusement, un circuit électrique classique possède inévitablement des propriétés qui apportent une certaine distorsion au courant lorsque la fréquence de celui-ci est élevée. En effet, un circuit électrique de soudage est assimilable à un circuit du premier ordre pour lequel l'expression du courant qui circule, en phase de croissance est de la forme :

$$\left[ i^{\uparrow} = \frac{U - U_{arc}}{R} * \left( 1 - e^{-\frac{R}{L}*t} \right) \right] \qquad (1)$$

où :

- U est la tension imposée par le générateur de courant,
- Uarc est une tension considérée comme constante (en première approximation),
- L est l'inductance du circuit électrique, et
- R est la résistance du circuit électrique. La résistance R représente globalement la charge du circuit électrique. Dans le cas d'un arc électrique, la charge est en réalité modélisée par une résistance R en série avec une tension Uarc qui vient se soustraire à la tension U.

La dynamique du courant est donc limitée par la constante de temps :

$$\left[ \tau = \frac{L}{R} \right] \qquad . \qquad (2)$$

De là, plus l'inductance (L) du circuit électrique est élevé, moins le système est rapide. De façon imagée, l'inductance (L) apporte une inertie en courant. On comprend alors qu'au delà d'une certaine fréquence, le courant admette une distorsion importante et connaisse des difficultés pour atteindre les valeurs de consigne haute et basse.

Au voisinage de t=0 (i.e. le début de la phase de montée de courant) , on peut approcher la formule (1) précédente par l'équation suivante :

$$\left[ i^{\uparrow} \approx \frac{U - U_{arc}}{L} * t \right] \qquad (3)$$

Il s'ensuit alors, que pour faire varier le courant de façon plus rapide, il convient de faire varier la tension U-Uarc, l'inductance L étant invariable dans une configuration donnée et Uarc constante en 1ère approximation.

Ainsi, si l'on veut faire croître le courant plus rapidement, il faut fixer une valeur de U élevée, par exemple de l'ordre de 200 à 600V alors qu'à l'inverse, si l'on veut faire décroître rapidement le courant, il faut imposer une valeur de U très inférieure à 0 (-200 à -600V).

Au vu de cela, le problème qui se pose est alors de pouvoir additionner ou soustraire une tension importante dans le circuit de soudage, au moment des phases transitoires, pour forcer le courant à évoluer plus rapidement dans le sens que l'on souhaite : croissance ou décroissance

La solution de l'invention est alors un module à haute-fréquence (MHF) pour source de courant de soudage ou de coupage comportant un circuit électrique comprenant une première branche de circuit, une deuxième branche de circuit et une troisième branche de circuit connectées en parallèles, et comprenant, en outre :

- plusieurs semi-conducteurs choisis parmi les transistors et les diodes,
- au moins un bloc condensateur et
- des moyens de pilotage des semi-conducteurs,

et dans lequel la première branche de circuit porte au moins un premier transistor commandé et la deuxième branche de circuit porte au moins un second transistor commandé.

Selon le cas, le module de l'invention peut comprendre l'une ou plusieurs des caractéristiques techniques suivantes :

- il comprend entre 2 et 4 semi-conducteurs commandés, en particulier des transistors ou 1 ou 2 diodes, de préférence il comprend des moyens à diodes, en particulier si moins de 4 semi-conducteurs commandés sont utilisés. En effet, si on utilise 2 transistors, alors il faut utiliser 2 diodes, alors que pour 3 transistors, il faut 1 diode, et que pour 4 transistors, il ne faut pas diode. Travailler avec 2 transistors et 2 diodes est l'idéal car le coût est très inférieur.

- la première branche de circuit porte au moins le premier transistor et une première diode.

- la deuxième branche de circuit porte au moins le second transistor et une deuxième diode.

- la troisième branche de circuit comprenant au moins le bloc condensateur.

- les moyens de pilotage commandent les semi-conducteurs de sorte que les semi-conducteurs sont fermés, lorsque le courant réel est inférieur au courant désiré, au cours de la phase de montée en courant, et de sorte que le courant passe par successivement par le semi-conducteur, le bloc condensateur et le semi-conducteur.

- les moyens de pilotage commandent les semi-conducteurs de sorte que les semi-conducteurs sont ouverts, lorsque le courant réel est supérieur au courant désiré, au cours de la phase de descente en courant, et de sorte que le courant passe successivement par la première diode, le bloc condensateur et la deuxième diode.

- la deuxième diode et le premier semi-conducteur sont passant et la première diode et le premier semi-conducteur sont bloqués si le courant réel est égal au courant désiré, lorsque le courant est établit, de sorte que le courant passe par la deuxième diode et le premier semi-conducteur.

- la première diode et le deuxième semi-conducteur sont passant et la deuxième diode et le deuxième semi-conducteur sont bloqués si le courant réel est égal au courant désiré, lorsque le courant est établit, de sorte que le courant passe par la première diode et le deuxième semi-conducteur.

- les moyens de pilotage sont ou comprennent une carte de commande électronique.

L'invention porte aussi sur une source de courant de soudage ou de coupage, tel un générateur, comportant un module selon l'invention, ainsi que sur un procédé de soudage ou coupage à l'arc utilisant un module ou une source de courant selon l'invention.

Le concept à l'origine de l'invention est donc de forcer la montée du courant en additionnant une tension sur le circuit électrique, d'annuler cette tension en phase de courant établi et ensuite de forcer la descente en soustrayant cette même tension au circuit.

Cette tension, est apportée par une batterie de condensateurs qui est insérée dans le circuit soit en série soit en opposition avec la tension fournie par le générateur (dans ce cas le module HF est externe au générateur), au moyen de semi-conducteurs commandés.

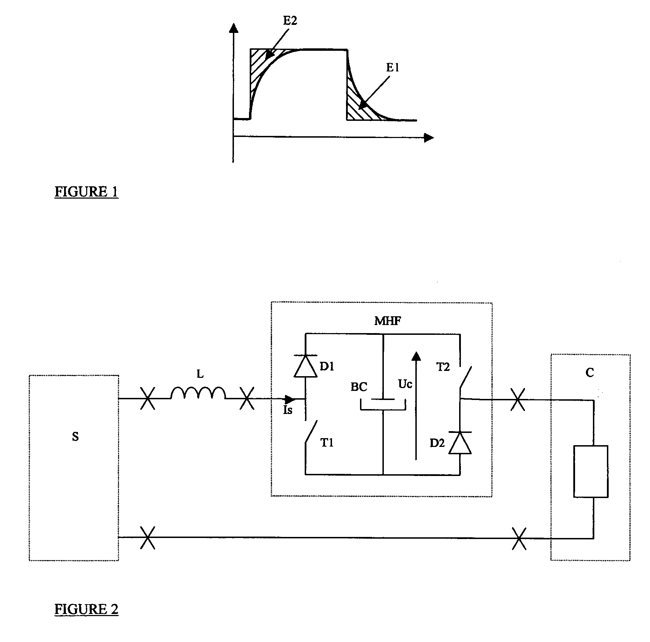

Comme montré sur la Figure 1 qui représente la réponse d'un courant à une consigne de forme carrée, en phase de descente du courant, l'énergie E1 est l'énergie qui est stocké dans l'inductance L du circuit et que l'on va récupérer en partie dans la batterie de condensateurs, alors qu'à l'inverse, en phase de montée du courant de l'énergie accumulée dans les condensateurs est restituée en E2.

La mise en oeuvre de l'invention est illustrée sur la figure 2 qui représente un schéma de principe d'un circuit électrique de soudage, dans lequel est inséré un module pulsé haute-fréquence MHF selon l'invention.

Le module MHF est en série avec une inductance L et la source S de courant. L'arc électrique de soudage est représenté, dans ce cas, par la charge C.

Le module haute-fréquence MHF de l'invention comporte un bloc condensateur BC et quatre semi-conducteurs dont deux (T1, T2) au moins sont commandés. Les semi-conducteurs T1, T2 commandés sont par exemple des transistors. Les diodes D1, D2 pourraient être remplacées par des semi-conducteurs commandés.

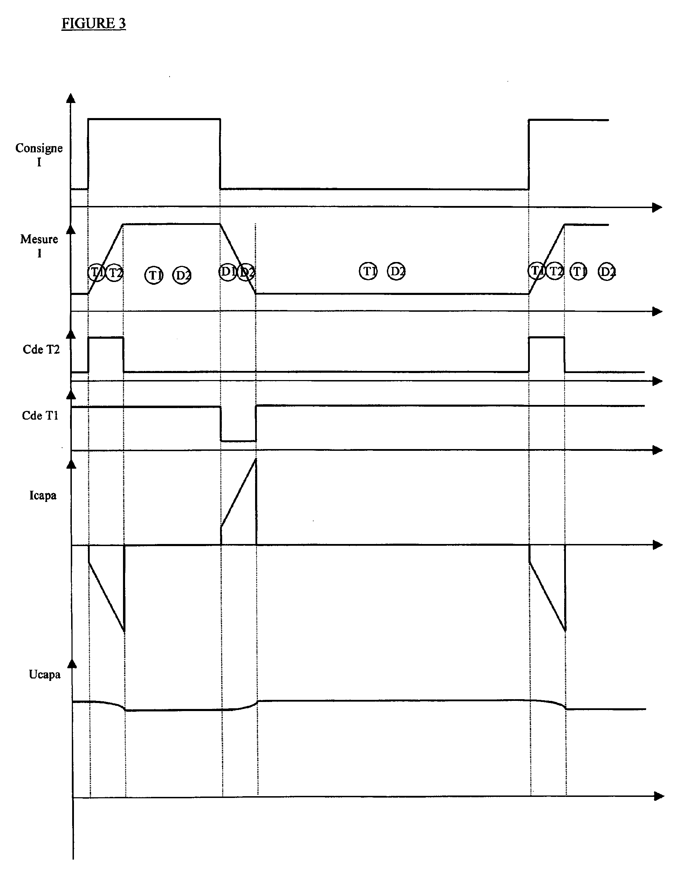

Le fonctionnement du module MHF est le suivant et est schématisé sur la figure 3 qui donne les variations de la consigne d'intensité (Consigne I), de la mesure de l'intensité (Mesure I), de la commande du transistor T1 (Cde T1) et de celle du transistor T2 (Cde T2), de l'intensité dans le bloc BC (Icapa) et de la tension dans le bloc BC (U capa) au cours du temps (en abscisses).

Le bloc condensateur BC est préchargé (ou non) à une valeur de tension Uc préfixée, par exemple 200 volt.

Lorsque le courant est établi (courant = consigne), par exemple 100 A, la batterie de condensateurs n'intervient pas. Le transistor T2 est ouvert et le transistor T1 est fermé. Le courant établi circule alors dans le circuit via successivement le transistor T1 et la diode D2.

Lorsque la consigne de courant passe de la valeur basse à la valeur haute (courant < consigne), on insère le condensateur BC dans le circuit de façon à ce que la tension Uc vienne s'additionner à la tension U du générateur ou source S de courant. Pour cela, on commande les transistors T1 et T2 pour que le courant passe par T1 et T2 en traversant le condensateur BC qui restitue alors de l'énergie.

Lorsque la consigne de courant passe de la valeur haute à la valeur basse (courant > consigne), on insère le condensateur BC dans le circuit de façon à ce que la tension Uc vienne se soustraire de la tension U du générateur S. Pour cela, on ouvre les transistors T1 et T2, et le courant circule alors forcément par les diodes D1 et D2 en traversant le condensateur BC qui récupère alors l'énergie.

La présente invention présente les avantages suivants :

- elle ne nécessite pas de module à proximité de la torche, il peut être situé n'importe où, en série dans le circuit électrique, ce qui permet d'intégrer le module au générateur de courant,

- le module offre un bon rendement car, lors de la décroissance du courant, l'énergie est récupérée et n'a pas besoin d'être dissipée, ce qui permet d'avoir un volume moindre et donc des contraintes de dimensionnement plus faibles sur la source de courant ; l'énergie est ensuite restituée dans l'arc en phase de croissance du courant,
- les fronts de croissance et décroissance du courant sont contrôlés en régulant la tension du condensateur,
- évite tout risque de décharger le condensateur dans les capacités de filtrage du hâcheur de courant, donc il est inutile de mettre une diode en série avec la source,
- sa structure est compatible avec des structures de types hâcheurs ou onduleurs,
- le module étant additionnel, il peut être rajouté simplement sur des sources de courant existantes en étant synchronisé avec ladite source.


**Revendications**

1. Module à haute-fréquence (MHF) pour source de courant de soudage ou de coupage comportant un circuit électrique comprenant une première branche de circuit, une deuxième branche de circuit et une troisième branche de circuit connectées en parallèles, et comprenant, en outre :

   - plusieurs semi-conducteurs choisis parmi les transistors (T1, T2) et les diodes (D1, D2),
   - au moins un bloc condensateur (BC) et
   - des moyens de pilotage des semi-conducteurs,

   et dans lequel la première branche de circuit porte au moins un premier transistor (T1) commandé et la deuxième branche de circuit porte au moins un second transistor (T2) commandé.

2. Module selon la revendication 1, **caractérisé en ce qu'**il comprend entre 2 et 4 semi-conducteurs commandés, en particulier des transistors (T1, T2) ou 1 ou 2 diodes (D1, D2), de préférence il comprend des moyens à diodes (D1, D2).

3. Module selon l'une des revendications 1 ou 2, **caractérisé en ce que** la première branche de circuit porte au moins le premier transistor (T1) et une première diode (D1).

4. Module selon l'une des revendications 1 à 3, **caractérisé en ce que** la deuxième branche de circuit porte au moins le second transistor (T2) et une deuxième diode (D2).

5. Module selon l'une des revendications 1 à 4, **carac-**

**térisé en ce que** la troisième branche de circuit comprenant au moins le bloc condensateur (BC).

6. Module selon l'une des revendications 1 à 5, **caractérisé en ce que** les moyens de pilotage commandent les semi-conducteurs (T1, T2) de sorte que les semi-conducteurs (T1, T2) sont fermés, lorsque le courant réel est inférieur au courant désiré, au cours de la phase de montée en courant, et de sorte que le courant passe par successivement par le semi-conducteur (T1), le bloc condensateur (BC) et le semi-conducteur (T2).

7. Module selon l'une des revendications 1 à 6, **caractérisé en ce que** les moyens de pilotage commandent les semi-conducteurs (T1, T2) de sorte que les semi-conducteurs (T1, T2) sont ouverts, lorsque le courant réel est supérieur au courant désiré, au cours de la phase de descente en courant, et de sorte que le courant passe successivement par la première diode (D1), le bloc condensateur (BC) et la deuxième diode (D2).

8. Module selon l'une des revendications 1 à 7, **caractérisé en ce que** la deuxième diode (D2) et le premier semi-conducteur (T1) sont passant et la première diode (D1) et le premier semi-conducteur (T2) sont bloqués si le courant réel est égal au courant désiré, lorsque le courant est établi, de sorte que le courant passe par la deuxième diode (D2) et le premier semi-conducteur (T1).

9. Module selon l'une des revendications 1 à 8, **caractérisé en ce que** la première diode (D1) et le deuxième semi-conducteur (T2) sont passant et la deuxième diode (D2) et le deuxième semi-conducteur (T2) sont bloqués si le courant réel est égal au courant désiré, lorsque le courant est établit, de sorte que le courant passe par la première diode (D1) et le deuxième semi-conducteur (T2).

10. Module selon l'une des revendications 1 à 9, **caractérisé en ce que** les moyens de pilotage sont une carte de commande électronique.

11. Source de courant de soudage ou de coupage, tel un générateur, comportant un module selon l'une des revendications 1 à 10.

12. Procédé de soudage ou coupage à l'arc utilisant un module selon l'une des revendications 1 à 10 ou une source de courant selon la revendication 11.

FIGURE 1

FIGURE 2

FIGURE 3